# EUROPÄISCHE PATENTANMELDUNG

(11) **EP 3 103 997 A1**
(43) Veröffentlichungstag der Anmeldung: **14.12.2016**
(21) Anmeldenummer: 16170958.9
(22) Anmeldetag: 24.05.2016
(51) Int. Cl.: F02M 26/49, F02D 41/00, F02D 41/22, F01P 11/18, F02M 26/25, F02M 26/28

(54) **KÜHLSYSTEM EINES KRAFTFAHRZEUGS**

(30) Priorität: 10.06.2015 DE 102015210646
(71) Anmelder: Mahle International GmbH, 70376 Stuttgart (DE)
(72) Erfinder: MAUCHER, Ulrich, 70825 Korntal-Münchingen (DE); PANTOW, Eberhard, 71364 Winnenden (DE)
(74) Vertreter: BRP Renaud & Partner mbB Rechtsanwälte Patentanwälte Steuerberater

(57) **Zusammenfassung**

Die Erfindung betrifft ein Kühlsystem (1) eines Kraftfahrzeuges (2) mit einem Kühlmittelkreislauf (3), einem Abgasrückführpfad (4) und einem darin eingebundenen Abgasrückführkühler (5). Erfindungswesentlich ist dabei,
- dass eine Druckerfassungseinrichtung (10) zur Erfassung eines Kühlmitteldrucks in dem Kühlmittelkreislauf (3) vorgesehen ist, die kommunizierend mit einer Stelleinrichtung (12) verbunden ist,
- dass eine mit der Stelleinrichtung (12) kommunizierend verbundene Ventileinrichtung (13) zur Steuerung eines in den Abgasrückführkühler (5) gelangenden Abgasstroms (14) vorgesehen ist,
- dass die Stelleinrichtung (12) derart ausgebildet ist, dass sie die Ventileinrichtung (13) zumindest teilweise schließt und damit den dem Abgasrückführkühler (5) zuströmenden Abgasstrom (14) zumindest reduziert, sofern die Druckerfassungseinrichtung (10) einen vordefinierten Druckabfall erfasst.

Hierdurch ist ein wirksamer und zugleich kostengünstiger Schutz des Abgasrückführkühlers (5) vor Überhitzung möglich.

## Beschreibung

Die vorliegende Erfindung betrifft ein Kühlsystem eines Kraftfahrzeugs mit einem Kühlkreislauf, einem Abgasrückführpfad und einem darin eingebundenen Abgasrückführkühler gemäß dem Oberbegriff des Anspruchs 1. Die Erfindung betrifft außerdem ein Kraftfahrzeug mit solch einem Kühlsystem und ein Verfahren zum Betreiben eines solchen Kühlsystems.

Aus der US 2014/0288801 A1 ist ein gattungsgemäßes Kühlsystem eines Kraftfahrzeugs mit einer Abgasrückführung und einem in die Abgasrückführung integrierten Abgasrückführkühler bekannt.

Auch aus der JP 2008-261297 A ist ein gattungsgemäßes Kühlsystem eines Kraftfahrzeuges bekannt. Generell besitzen Kühlungskomponenten, wie insbesondere aus Edelstahl gefertigte Abgaskühler, die in einen Kühlmittelkreislauf eines Kraftfahrzeuges eingebunden sind, einen vergleichsweise hohen Wiederbeschaffungswert. Dies liegt nicht nur an den hohen Materialkosten, sondern an ebenfalls hohen Fertigungskosten. Aus diesem Grund ist es wünschenswert, derartige Kühlungskomponenten wirksam gegen Schäden zu schützen, auch wenn sie durch Fehler im Kraftfahrzeug nicht bestimmungsgemäß betrieben werden. Insbesondere bei einem Abgasrückführkühler besteht dabei ein hohes Schadensrisiko, wenn ein Fehler im Kühlmittelkreislauf auftritt. Dies kann beispielsweise durch Fehler in der Ansteuerung oder Ausfälle von Ventilen oder Pumpen verursacht werden, aber auch durch Auswahl bzw. Beschädigung von vergleichsweise kostengünstigen Komponenten im Leitungssystem, wie Schläuche, Schellen, Verschraubungen oder ähnlichem. Abgasrückführkühler sind hierbei besonders gefährdet, da sie eine vergleichsweise hohe Leistung und gleichzeitig eine vergleichsweise geringe thermische Trägheit aufweisen und sich beispielsweise bei einem Fehler im Kühlmittelkreislauf innerhalb weniger Sekunden so stark erhitzen, dass sie Schaden nehmen können. Selbst wenn dabei der Motor sehr schnell in einen Notlaufmodus übergeht, beispielsweise verbunden mit einer Leistungsreduzierung, kann nicht gewährleistet werden, dass der Abgaskühler unbeschädigt bleibt. Ein spezieller Schutz des Abgasrückführkühlers ist bislang somit überhaupt nicht vorgesehen.

Die vorliegende Erfindung beschäftigt sich daher mit dem Problem, für ein Kühlsystem der gattungsgemäßen Art eine verbesserte oder zumindest eine alternative Ausführungsform anzugeben, die sich insbesondere für einen spezifischen Schutz für einen Abgasrückführkühler auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, in einem an sich bekannten Kühlsystem eines Kraftfahrzeuges mit einem Kühlmittelkreislauf, einem Abgasrückführpfad und einem darin eingebundenen Abgasrückführkühler, einen Kühlmitteldruck zu überwachen und einen dem Abgasrückführkühler zuströmenden Abgasstrom sofort zumindest zu reduzieren, sofern ein vordefinierter Druckabfall und damit eine Kühlmittelunterversorgung erfasst werden. Das erfindungsgemäße Kühlsystem weist hierzu eine Druckerfassungseinrichtung zur Erfassung des Kühlmitteldrucks in dem Kühlmittelkreislauf auf, ebenso wie eine mit der Druckerfassungseinrichtung kommunizierend verbundene Stelleinrichtung. Die Stelleinrichtung wiederum ist kommunizierend mit einer Ventileinrichtung zur Steuerung eines in den Abgasrückführkühler gelangenden Abgasstromes verbunden und zugleich derart ausgebildet, dass sie die Ventileinrichtung zumindest teilweise, vorzugsweise gänzlich schließt, und damit den dem Abgasrückführkühler zuströmenden Abgasstrom zumindest reduziert, vorzugsweise stoppt, sofern die Druckerfassungseinrichtung einen vordefinierten Druckabfall erfasst. Hierdurch ist es möglich, bei einem im Kühlmittelkreislauf auftretenden Fehler den Abgasrückführkühler unmittelbar und sofort vom heißen Abgasstrom zu trennen und dadurch vor einer Überhitzung und einer Beschädigung zu schützen. Dies kann darüber hinaus unabhängig von bisher bekannten Notlaufmoden, die beispielsweise die Leistung eines Motors reduzieren, erfolgen. Mit dem erfindungsgemäßen Kühlsystem ist es somit möglich, den aufgrund des heißen zuströmenden Abgasstromes im Falle eines Fehlers im Kühlmittelkreislauf besonders gefährdeten Abgasrückführkühler wirksam zu schützen und dadurch dessen Betriebssicherheit auch langfristig gewährleisten sowie dessen Wartungskosten reduzieren zu können.

Bei einer vorteilhaften Weiterbildung der erfindungsgemäßen Lösung ist die Ventileinrichtung als Klappe ausgebildet. Eine derartige Klappe kann beispielsweise in einer abgasführenden Zuleitung zum Abgasrückführkühler angeordnet sein und diese Zuleitung verschließen, sofern die Druckerfassung einen Druckabfall im Kühlmittelkreislauf detektiert bzw. erfasst, der einen vordefinierten Grenzwert erreicht oder überschreitet. Hierdurch kann gewährleistet werden, dass aufgrund von Pulsationen auch die im Betrieb üblicherweise auftretende Druckschwankungen nicht zu einem Sperren des Abgasrückführkühlers führen.

Bei einer weiteren vorteilhaften Ausführungsform der erfindungsgemäßen Lösung ist die Ventileinrichtung mittels einer Feder in ihre Schließstellung vorgespannt. Eine derartige Feder dient somit als Fail-Safe-Element, so dass die Stelleinrichtung die Ventileinrichtung während des normalen Betriebs in ihrer Öffnungsstellung hält, wobei bei einem entsprechenden Signal der Druckerfassungseinrichtung die Stelleinrichtung die Ventileinrichtung in ihre Schließstellung oder eine zumindest teilweise geschlossene Stellung überführt. Bei einem Ausfall der Stelleinrichtung sollte jedoch trotzdem gewährleistet werden, dass eine Überhitzung und damit eine Beschädigung des Abgasrückführkühlers zuverlässig verhindert wird, so dass bei einem Ausfall der Stelleinrichtung diese ihre die Ventileinrichtung in ihrer Öffnungsstellung haltende Haltekraft verliert und die Ventileinrichtung mittels der zuvor beschriebenen Feder in ihre Schließstellung überführt wird. In diesem Fall wäre selbstverständlich ein entsprechendes Warnsignal an ein Motorsteuergerät zu übermitteln.

Bei einer weiteren vorteilhaften Ausführungsform der erfindungsgemäßen Lösung weist die Druckerfassungseinrichtung zumindest zwei Drucksensoren auf, die in dem Kühlmittelkreislauf angeordnet sind. Die beiden Drucksensoren können dabei beispielsweise eingangsseitig und ausgangsseitig des Abgasrückführkühlers angeordnet sein und damit platzsparend an diesem angebunden werden. In diesem Fall könnten die beiden Drucksensoren nicht nur jeweils einzeln einen Druckabfall erfassen, sondern zudem auch den Druckabfall des Kühlmittels durch den Abgasrückführkühler. Dadurch kann insbesondere ein Kühlmittelvolumenstrom im Kühler und/oder Abgasrückführkühler überprüft werden, wodurch sichergestellt werden kann, dass eine unzureichende Kühlmittelversorgung beispielsweise bei einem Schaden oder Ausfall einer Kühlmittelpumpe oder einem falsch gestellten Kühlmittelventil detektiert und eine Beschädigung vermieden wird. Solche Fehler sind nicht zwangsläufig mit einem Abfall des Drucks im Kühlmittelkreislauf verbunden und können daher mit einem einzelnen Drucksensor nicht sicher detektiert werden. Mit einem Differenzdrucksensor ist jedoch die Möglichkeit gegeben, den Kühlmitteldurchfluss als Druckabfall über den Abgasrückführkühler oder eine stromab des Kühlers gelegene Messstrecke (beispielsweise eine Blende, V-Konus o.ä.) mit einem einzigen Sensor zu messen. Auch dieses Messsignal kann genutzt werden, um direkt eine Druckdose an der Ventileinrichtung für den Kühler zu stellen. Da der Differenzdruck nicht nur von der Durchflussmenge, sondern stark auch von der Viskosität und somit der Temperatur und Zusammensetzung des Kühlmittels abhängt, können über den Differenzdruck jedoch vorwiegend nur starke Schäden detektiert werden. Ein moderat reduzierter Kühlmittelstrom kann über den Differenzdruck alleine nicht zuverlässig detektiert werden. Bei direkter Beaufschlagung des Differenzdrucksignals auf eine Druckdose kann sichergestellt werden, dass der Abgasrückführkühler/Kühler nicht komplett ohne Kühlmittelversorgung ist, was einen Schutz bis zum Einsetzen des Notlaufmodus im Motor bietet. Vorteilhaft wäre ein Abgleich des Differenzdrucks in der ECU mit Sollwerten, die nicht unterschritten werden dürfen.

Zweckmäßig ist die Ventileinrichtung in ein Abgasrückführventil integriert. Ein Abgasrückführventil, welches üblicherweise mit einem Motorsteuergerät (ECU) verbunden ist, steuert dabei den der Verbrennung erneut zuzuführenden Abgasanteil, wobei in diesem Fall die Ventileinrichtung platzsparend in das Abgasrückführventil integriert werden könnte. Selbstverständlich ist auch denkbar, dass das Abgasrückführventil selbst die Ventileinrichtung ist, so dass für die Ventileinrichtung auf das ohnehin bereits vorhandene Abgasrückführventil zurückgegriffen werden kann und nicht nur die Teilevielfalt, sondern auch die Kosten reduziert werden können.

Zweckmäßig sind die Druckerfassungseinrichtung und die Stelleinrichtung in einer Druckdose oder in einer Differenzdruckdose integriert. Hierdurch können die Druckerfassungseinrichtung und die Stelleinrichtung einfach und kostengünstig in einem gemeinsamen Bauteil zusammengefasst werden, wobei alternativ selbstverständlich auch denkbar ist, dass die Druckerfassungseinrichtung als Druckschalter, insbesondere als sogenanntes Piezoelement und die Stelleinrichtung als elektrischer Steller ausgebildet sind. Durch den Druckabfall wird dabei eine mechanische Kraft auf das Piezoelement ausgeübt, welches vom Piezoelement in eine elektrische Spannung umgewandelt und mittels dieser der elektrische Steller betätigt wird. Selbstverständlich sind auch weitere alternative Ausführungsformen denkbar.

Die Erfindung beruht weiter auf dem allgemeinen Gedanken, ein Verfahren zum Betreiben eines Kühlsystem eines Kraftfahrzeuges anzugeben, bei dem eine Druckerfassungseinrichtung einen Kühlmitteldruck in dem Kühlmittelkreislauf erfasst und mit kommunizierend mit einer Stelleinrichtung verbunden ist, die die Ventileinrichtung zumindest teilweise schließt und damit den dem Abgasrückführkühler zuströmenden Abgasstrom zumindest reduziert, sofern die Druckerfassungseinrichtung einen vordefinierten Druckabfall erfasst. Mittels des erfindungsgemäßen Verfahrens ist es möglich, den aufgrund des heißen zuströmenden Abgasstromes im Falle eines Fehlers im Kühlmittelkreislauf besonders gefährdeten Abgasrückführkühler wirksam zu schützen und dadurch dessen Betriebssicherheit auch langfristig gewährleisten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: ein erfindungsgemäßes Kühlsystem eines Kraftfahrzeuges,
- Fig. 2: eine mögliche Integration einer Druckerfassungseinrichtung und einer Stelleinrichtung in eine Druckdose oder eine Differenzdruckdose.

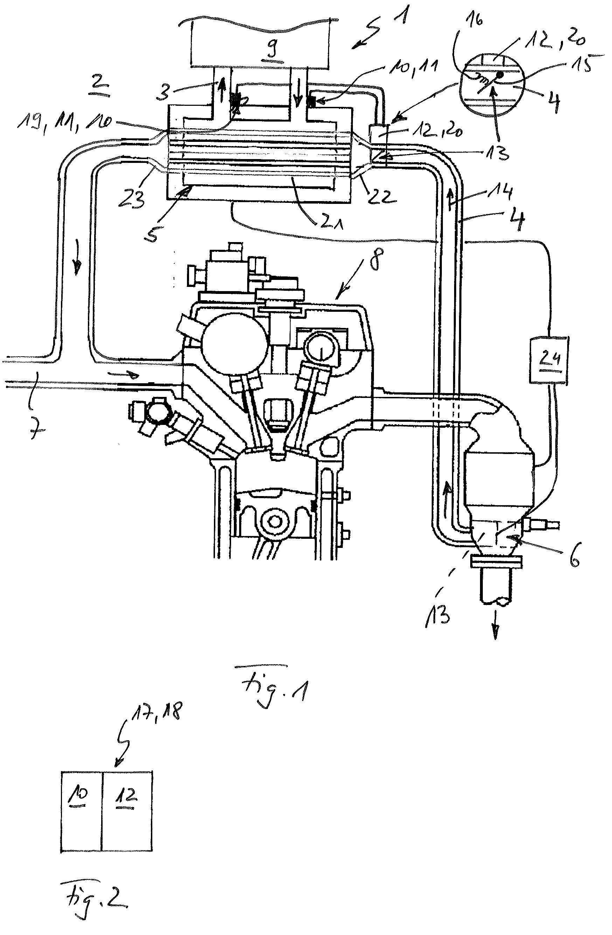

Entsprechend der Fig. 1, weist ein erfindungsgemäßes Kühlsystem 1 eines Kraftfahrzeuges 2 in einem Kühlmittelkreislauf 3, einen Abgasrückführpfad 4 sowie einen darin eingebundenen Abgasrückführkühler 5 auf. Der Abgasrückführpfad 4 verläuft dabei von einem Abgasrückführventil 6 über den Abgasrückführkühler 5 zu einem Frischluftpfad 7, über welchen ein Motor 8 (Verbrennungsmotor) mit Verbrennungsluft versorgt wird. Der Kühlmittelkreislauf 3 ist darüber hinaus mit einem Kühler 9 verbunden, mittels welchem üblicherweise auch der Motor 8 gekühlt wird. Um nun eine Beschädigung des Abgasrückführkühlers 5 bei einem Fehler im Kühlmittelkreislauf 3 wirksam ausschließen zu können, ist erfindungsgemäß eine Druckerfassungseinrichtung 10 mit zumindest einem Drucksensor 11 zur Erfassung eines Kühlmitteldrucks in dem Kühlmittelkreislauf 3 vorgesehen. Kommunizierend verbunden mit der Druckerfassungseinrichtung 10 ist eine Stelleinrichtung 12, die wiederum kommunizierend mit einer Ventileinrichtung 13 zur Steuerung eines in den Abgasrückführkühler 5 gelangenden Abgasstroms 14 verbunden ist. Die Stelleinrichtung 12 ist dabei erfindungsgemäß derart ausgebildet, dass die Ventileinrichtung 12 zumindest teilweise, vorzugsweise sogar komplett, schließt und damit den dem Abgasrückführkühler 5 zuströmende Abgasstrom 14 zumindest reduziert, vorzugsweise stoppt, sofern die Druckerfassungseinrichtung 10 einen vordefinierten Druckabfall erfasst. Tritt somit im Kühlmittelkreislauf 3 ein Fehler auf, beispielsweise durch einen geplatzten Schlauch oder eine geplatzte Leitung, was unmittelbar zu einem Druckabfall im Kühlmittelkreislauf 3 führt, wird dieser von der Druckerfassungseinrichtung 10 erfasst und führt sofort zu einem Reduzieren bzw. einem Stoppen des Abgasstromes 14, wodurch vermieden werden kann, dass der Abgasrückführkühler 5 weiter mit heißem Abgas beaufschlagt wird, jedoch aufgrund des Fehlers im Kühlmittelkreislauf 3 nicht mehr ausreichend gekühlt werden kann. Dies ist von besonders großem Vorteil, da insbesondere Komponenten des Abgasrückführkühlers 5, wie beispielsweise ein Kühlerblock 21 desselben, oftmals aus hochwertigem Material bestehen und dadurch nur teuer zu ersetzen sind.

Bislang erfolgte eine derartige speziell auf den Abgasrückführkühler 5 zugeschnittene Sicherungsmaßnahme nicht, da lediglich beispielsweise eine Temperatur des Kühlmittels im Kühlmittelkreislauf 3 überwacht wurde. Hatte jedoch der Kühlmittelkreislauf 3 ein Leck, so muss dies nicht unbedingt Einfluss auf die Kühlmitteltemperatur haben und damit zu einem entsprechenden Warnsignal eines Motorsteuergeräts 24 führen. Ein derartiges Leck mit Kühlmittelkreislauf 3 bewirkte jedoch eine nur unzureichende Kühlung des Abgasrückführkühlers 5, wodurch dieser bei weiter ungebremstem Zustrom von Abgas 14, selbst bei einem durch das Motorsteuergerät 24 ausgelösten Notlaufmodus überhitzen kann und damit beschädigt wird.

Betrachtet man die Detaildarstellung der Ventileinrichtung 13 in Fig. 1, so kann man erkennen, dass die Ventileinrichtung 13 beispielsweise als Klappe 15 ausgebildet ist, bzw. eine solche aufweist. Zusätzlich vorgesehen sein kann eine Feder 16, die die Ventileinrichtung 13, respektive die Klappe 15 in ihre Schließstellung vorspannt und dadurch eine Art Fail-Safe-Sicherung darstellt. Bei einem Ausfall der Stelleinrichtung 12, wodurch beispielsweise ein Schließen der Ventileinrichtung 13 ermöglicht wäre, wird in diesem Fall die Feder 16 zum Schließen des Abgasrückführventils 13 und damit zum Schutz des Abgasrückführkühlers 5 vor Überhitzung führen.

Die Ventileinrichtung 13 ist dabei gemäß der Fig. 1 stromauf des Abgasrückführkühlers 5 im Abgasrückführpfad 4 angeordnet, wobei selbstverständlich auch eine direkt eingangsseitige Anordnung der Ventileinrichtung 13 am Abgasrückführkühler 5 vorgesehen sein kann, insbesondere an einem Eintrittsdiffusor 22, oder alternativ an einem Austrittsdiffusor 23, wobei die Anordnung stromauf des Abgasrückführkühlers 5 vorteilhafter ist. Rein theoretisch kann die Ventileinrichtung 13 genauso gut auch stromab des Abgasrückführkühlers 5 liegen, da auch dann kein Abgas 14 mehr den Abgasrückführkühler 5 durchströmt.

Generell umfasst die Druckerfassungseinrichtung 10 zumindest einen Drucksensor 11, wobei im gezeichneten Beispiel gemäß der Fig. 1 zwei Drucksensoren 11 vorgesehen sind, die eingangsseitig und ausgangsseitig des Abgasrückführkühlers 5 angeordnet sind. Hierdurch kann über die Druckerfassungseinrichtung 10 zusätzlich ein Druckabfall im Abgasrückführkühler 5 überwacht werden, der dazu verwendet werden kann, einen freien Strömungsquerschnitt im Abgasrückführkühler 5 zu überwachen. Auch lässt sich hiermit ein Relativdruck zwischen den beiden Drucksensoren 11 erfassen, wodurch der detektierte Druckverlust in dem Kühlmittelkreislauf 3 bzw. im Abgasrückführkühler 5 dazu genutzt werden kann, die Stelleinrichtung 12 zu betätigen. In diesem Fall kann somit nicht nur ein vordefinierter Druckabfall, sondern auch ein reduzierter Kühlmitteldurchfluss zum Schließen der Ventileinrichtung 13 genutzt werden.

Bei einer weiteren vorteilhaften Ausführungsform der erfindungsgemäßen Lösung können die Druckerfassungseinrichtung 10 und die Stelleinrichtung 12 in einer Druckdose 17 oder in einer Differenzdruckdose 18 integriert sein, wie dies beispielsweise gemäß der Fig. 2 dargestellt ist. Ebenfalls vorgesehen sein kann, dass die Druckerfassungseinrichtung 10 als Druckschalter, insbesondere als sogenanntes Piezoelement 19 und die Stelleinrichtung 12 als elektrischer Steller 20 ausgebildet sind. In diesem Fall würde eine mechanische Druckänderung beim als Piezoelement 19 ausgebildeten Drucksensor 11 oder bei der als Piezoelement 19 ausgebildeten Druckerfassungseinrichtung 10 ein elektrisches Signal erzeugen, welches an die Stelleinrichtung 12 und konkret in diesem Fall an den elektrischen Steller 20 übermittelt werden würde, welcher daraufhin die Ventileinrichtung 13 entsprechend steuert.

Ebenfalls ist denkbar, dass bei einer alternativen Ausführungsform die Ventileinrichtung 13 das Abgasrückführventil 6 integriert ist, so dass dieser nicht nur die Steuerung bzw. Regelung des der Verbrennung erneut zuzuführenden Abgases 14 zugewiesen wird, sondern auch der Schutz des Abgasrückführkühlers 5 vor Überhitzung bei einem in dem Kühlmittelkreislauf 3 auftretenden Fehler. Eine derart in das Abgasrückführventil 6 integrierte Ventileinrichtung 13 ist dabei gemäß der Fig. 1 lediglich mit unterbrochen gezeichneter Linie und damit als Option dargestellt. Auch in diesem Fall sitzt die Ventileinrichtung 13 stromauf des Abgasrückführkühlers 5 und sperrt den Abgasstrom 14 vorzugsweise komplett ab, sofern im Kühlmittelkreislauf 3 ein vordefinierter Druckabfall erfasst wird. In diesem Fall könnte die Druckerfassungseinrichtung 10 auch mit einem Motorsteuergerät 24 verbunden sein, welche dann die Ventileinrichtung 13 im Bereich des Abgasrückführventils 6 oder aber das Abgasrückführventil 6 selbst bei einem entsprechend detektierten Druckabfall im Kühlmittelkreislauf 6 schließt.

Prinzipiell ist denkbar, dass zumindest die Druckerfassungseinrichtung 10, die Stelleinrichtung 12 und die Ventileinrichtung 13 als autark arbeitendes System ausgebildet sind und dadurch ohne die ECU (Motorsteuergerät 24) zu nutzen, im Sinne eines stand-alone-Systems verwendet werden können. Dies bietet den großen Vorteil, dass keine Modifikationen am Fahrzeug bei der Integration erforderlich sind. Alternativ ist auch vorstellbar, dass zumindest die Druckerfassungseinrichtung 10, die Stelleinrichtung 12 und die Ventileinrichtung 13 kommunizierend mit dem Motorsteuergerät 24 verbunden und insbesondere von diesem geregelt sind, was eine präzisere Durchflussüberwachung ermöglicht.

Generell ist bei sämtlichen aufgezeigten Lösungswegen ein effektiver Schutz des Abgasrückführkühlers 5 vor Überhitzung bei lediglich marginalem konstruktivem Mehraufwand möglich, insbesondere sofern beispielsweise für die Ventileinrichtung 13 das ohnehin vorhandene Abgasrückführventil 6 genutzt wird.

## Patentansprüche

1. Kühlsystem (1) eines Kraftfahrzeuges (2) mit einem Kühlmittelkreislauf (3), einem Abgasrückführpfad (4) und einem darin eingebundenen Abgasrückführkühler (5),
**dadurch gekennzeichnet,**
- **dass** eine Druckerfassungseinrichtung (10) zur Erfassung eines Kühlmitteldrucks in dem Kühlmittelkreislauf (3) vorgesehen ist, die kommunizierend mit einer Stelleinrichtung (12) verbunden ist,
- **dass** eine mit der Stelleinrichtung (12) kommunizierend verbundene Ventileinrichtung (13) zur Steuerung eines in den Abgasrückführkühler (5) gelangenden Abgasstroms (14) vorgesehen ist,
- **dass** die Stelleinrichtung (12) derart ausgebildet ist, dass sie die Ventileinrichtung (13) zumindest teilweise schließt und damit den dem Abgasrückführkühler (5) zuströmenden Abgasstrom (14) zumindest reduziert, sofern die Druckerfassungseinrichtung (10) einen vordefinierten Druckabfall erfasst.

2. Kühlsystem nach Anspruch 1,
**dadurch gekennzeichnet, dass**
dass die Stelleinrichtung (12) derart ausgebildet ist, dass sie die Ventileinrichtung (13) schließt und damit den dem Abgasrückführkühler (5) zuströmenden Abgasstrom (14) stoppt, sofern die Druckerfassungseinrichtung (10) einen vordefinierten Druckabfall erfasst.

3. Kühlsystem nach Anspruch 1 oder 2,
**dadurch gekennzeichnet, dass**
die Ventileinrichtung (13) als Klappe (15) ausgebildet ist.

4. Kühlsystem nach einem der Ansprüche 1 bis 3,
**dadurch gekennzeichnet, dass**
die Ventileinrichtung (13) mittels einer Feder (16) in ihre Schließstellung vorgespannt ist.

5. Kühlsystem nach einem der Ansprüche 1 bis 4,
**dadurch gekennzeichnet, dass**
- die Ventileinrichtung (13) am Abgasrückführkühler (5) stromab oder stromauf desselben im Abgasrückführpfad (4) angeordnet ist, oder
- die Ventileinrichtung (13) in ein Abgasrückführventil (6) integriert ist.

6. Kühlsystem nach einem der Ansprüche 1 bis 5,
**dadurch gekennzeichnet, dass**
die Druckerfassungseinrichtung (10) zumindest einen Drucksensor (11) aufweist.

7. Kühlsystem nach einem der Ansprüche 1 bis 6,
**dadurch gekennzeichnet, dass**
die Druckerfassungseinrichtung (10) zumindest zwei Drucksensoren (11) umfasst, die im Kühlmittelkreislauf (3) angeordnet sind.

8. Kühlsystem nach Anspruch 7,
**dadurch gekennzeichnet, dass**
die zwei Drucksensoren (11) eingangsseitig und ausgangsseitig des Abgasrückführkühlers (5) angeordnet sind.

9. Kühlsystem nach einem der Ansprüche 1 bis 8,
**dadurch gekennzeichnet, dass**
- die Druckerfassungseinrichtung (10) und die Stelleinrichtung (12) in einer Druckdose (17) oder in einer Differenzdruckdose (18) integriert sind, oder
- die Druckerfassungseinrichtung (10) als Druckschalter, insbesondere als Piezoelement (19), und die Stelleinrichtung (12) als elektrischer Steller (20) ausgebildet sind.

10. Kühlsystem nach einem der Ansprüche 1 bis 9,
**dadurch gekennzeichnet, dass**
- dass zumindest die Druckerfassungseinrichtung (10), die Stelleinrichtung (12) und die Ventileinrichtung (13) als autark arbeitendes System ausgebildet ist, oder
- dass zumindest die Druckerfassungseinrichtung (10), die Stelleinrichtung (12) und die Ventileinrichtung (13) kommunizierend mit einem Motorsteuergerät (24) verbunden sind.

11. Kraftfahrzeug (2) mit einem Kühlsystem (1) nach einem der Ansprüche 1 bis 10.

12. Verfahren zum Betreiben eines Kühlsystem (1) eines Kraftfahrzeuges (2) mit einem Kühlmittelkreislauf (3), einem Abgasrückführpfad (4) und einem darin eingebundenen Abgasrückführkühler (5), bei dem
- eine Druckerfassungseinrichtung (10) einen Kühlmitteldruck in dem Kühlmittelkreislauf (3) erfasst und mit kommunizierend mit einer Stelleinrichtung (12) verbunden ist,
- die Stelleinrichtung (12) die Ventileinrichtung (13) zumindest teilweise schließt und damit den dem Abgasrückführkühler (5) zuströmenden Abgasstrom (14) zumindest reduziert, sofern die Druckerfassungseinrichtung (10) einen vordefinierten Druckabfall erfasst.
